# EUROPEAN PATENT SPECIFICATION

(11) **EP 2 672 816 B1**
(45) Date of publication and mention of the grant of the patent: **18.07.2018**
(21) Application number: 12744368.7
(22) Date of filing: 09.02.2012
(51) Int. Cl.: A01N 25/26, B01F 7/04, B01F 15/00, B01F 3/12

(54) **SELF-CLEANING MIXING DEVICES AND METHODS OF USING THE SAME**
SELBSTREINIGENDE MISCHVORRICHTUNGEN UND VERWENDUNGSVERFAHREN DAFÜR
DISPOSITIFS DE MÉLANGE AUTONETTOYANT ET LEURS PROCÉDÉS D'UTILISATION

(30) Priority: 09.02.2011 US 201161441168 P
(43) Date of publication of application: 18.12.2013
(73) Proprietor: Everris International B.V., 6422 PD Heerlen (NL)
(72) Inventor: CANALE, Kimberly, Anne, Dublin, OH 43017 (US); DAMMANN, Laurence, G., Hilliard, OH 43026 (US); SILER, Joshua, Paul, Hilliard, OH 43040 (US); TERLINGEN, Johannes, Gijsbertus Antonius, NL-6373 VT Landgraaf (NL)
(74) Representative: Hoyng Rokh Monegier LLP
(86) International application number: PCT/US2012/024456
(87) International publication number: WO 2012/109431

(56) References cited:
- EP-A2- 1 990 085
- WO-A1-2006/079228
- GB-A- 795 820
- US-A- 4 772 490
- US-A- 5 938 813
- US-A- 5 938 813
- US-A1- 2003 227 814
- US-A1- 2004 076 073

## Description

### BACKGROUND OF THE INVENTION

### (a) Field of Invention

The present invention relates to a method of preparing a controlled release fertilizer by coating a granular substrate with a coating material.

### (b) Description of the Related Arts

A problem associated with the operation of mixing devices, over an extended period of time, is the fouling or agglomeration of solids, liquids and combinations thereof on the rotational, mixing, or stirring elements and/or static parts of the mixing device. For example, the build up of curing polymers that encapsulate granular substrates have a tendency to foul rotational, mixing, or stirring elements, such as paddles. This build up may result in crushing substrates, blocking outlets or even stop the mixing process. In general, the fouling decreases the efficiency of coating the substrate. As a result, there is a deterioration in the final product quality.

To overcome this problem, the operation of the mixing device must be discontinued to clean the build-up on mixing and static elements. This discontinuous process slows down the overall coating process and may potentially damage the mixing device. Furthermore, cleaning induces additional costs.

Accordingly, there is a need in the art for mixing methods of operating mixing devices that provide effective and efficient mixing and/or blending of substrates and coating materials. Document US 5,938,813 discloses a method of coating a granular substrate fertilizer by using a mixing device.

### SUMMARY OF THE PREFERRED EMBODIMENTS OF THE INVENTION

The present invention addresses these needs and overcomes the problems associated with the fouling of mixing devices by providing a method of preparing a release fertilizer in accordance with claim 1.

### BRIEF DESCRIPTION OF THE DRAWINGS

Figure 1 shows a graphical comparison of substrates coated using an exemplary method of the invention compared to substrates coated using conventional coating processes.
Figure 2 shows a picture of a pugmill after 14 hours of operation using standard coating processes.
Figure 3 shows a picture of a pugmill after 16 hours of operation using an exemplary method of the invention.

### DETAILED DESCRIPTION OF THE PREFERRED EMBODIMENTS OF THE INVENTION

The disclosure provides for improved mixing devices, methods of operating mixing devices, and methods of blending granular substrates with coating materials. In particular, the disclosure provides for a method of operating a mixing device with rotational, mixing, or stirring elements used for mixing solids, viscous liquids, or combinations thereof that have a tendency of agglomerating or building-up on the rotational, mixing, stirring, or static (e.g., walls of mixing device) elements of the mixing device. Additionally, the disclosure also provides for methods of blending granular substrates with coating materials that have a tendency of agglomerating or building-up on the rotational, mixing, or stirring elements. These methods involve the operation of rotational, mixing, or stirring elements of a mixing device in a particular rotational, mixing, or stirring pattern that substantially prevents the build-up and/or agglomerating materials on the rotational, mixing, or stirring elements of the mixing device. The disclosure also provides for mixing devices such as pugmills capable of performing the methods described herein.

The inventors have unexpectedly found that the mixing devices described herein may be operated continuously without the need for removing build-up on the rotational, mixing, or stirring elements. Moreover, by performing the methods described herein, mixing devices are capable of self-cleaning the rotational, mixing, or stirring elements of the mixing device. As a result, the continuous operation of the mixing devices may be extended and the efficiency of mixing or blending is improved.

### (a) Mixing Devices

The disclosure provides for improved mixing devices, methods of operating mixing devices, and methods of blending granular substrates involving the use of mixing devices. Those of skill in the art will appreciate that a mixing device is any device capable of blending, agitating, stirring, or mixing a substrate (e.g., sticky solids, solids with a viscous non-curing liquid, and solids with a curing liquid).

The mixing devices suitable for use in the present invention maybe situated horizontally. Additionally, the mixing devices may comprise a mixing area such as a vessel, tube, trough, pan, or any other suitable container in which the various components are combined. The mixing device may also comprise a lid or cover which contains or excludes, for example, environmental elements, gases, or contaminants. In another aspect, the mixing device may comprise insulation so that the mixing area may be temperature regulated.

Those of skill in the art will also appreciate that the mixing devices may comprise some a shaft, axel, arm or structure capable of linking the motor(s) of the mixing device to a rotational, mixing, or stirring elements described herein. In one aspect, the mixing device may comprise a single shaft or axel. In another aspect, the mixing device may comprise two or more shafts within the mixing device. In particular aspect, the mixing device comprises at least two axels or shafts.

Also suitable for the instant invention is a mixing device which is capable of moving the rotational, mixing, or stirring elements bi-directionally or multi-directionally in a two dimensional plane or in a three dimensional plane. For example, the rotational elements embodied by the present invention include those rotational elements which rotate clockwise and counter-clockwise, or forwards and backwards.

In another embodiment, the mixing device may also comprise a motor capable of operating shafts and/or axels that connect to it in a multiple directions. Thus, in one aspect, the motor is capable of operating such that the shaft and/or axel moves clockwise and counter-clockwise, or forwards and backwards.

In another embodiment, the mixing devices suitable for the present invention include those which comprise various injection points. Injection points maybe found along the length of the mixing device, running perpendicularly or parallel with the shaft or axel. Additionally, there may be multiple injection points found within the mixing device. These may include injection points which insert the same or different coating materials. In one embodiment, the injection points run parallel with the rotational elements and inject different coating material. The injection points may also be attached to a static mixer. The static mixer may be used to mix or combine the coating materials before injection into the mixing device.

Thus, the mixing devices used in the invention include, but are limited to paddle mixers, nauta mixers, pugmills, horizontal paddle mixers, or any continuous mixers. In a particular embodiment, the mixing device is a pugmill. Regardless of the type of mixing device used, suitable mixing devices comprise a mixing area or bed in which the mixing occurs. These may include pans, bins, troughs, beds, or any other container vessel that hold the substrates and coating materials.

### (b) Rotational, Mixing, or Stirring Elements

The disclosure provides for improved mixing devices, methods of operating mixing devices, and methods of blending granular substrates involving the use of rotational, mixing, or stirring elements. Rotational, mixing, or stirring elements refer to paddles, mixers, screws, pins, blades, bars, or any other element capable of mixing, blending, stirring, or agitating solids, liquids, or combinations thereof. These rotational, mixing, or stirring elements are attached to shafts, axels, arms or linking structures of a mixing device and move forwards, backwards, clockwise, or counter-clockwise. Those of skill in the art will appreciate that any form of rotational, mixing, or stirring element may be used based on the desire or outcome of the mixing they intend to accomplish.

In another embodiment, the rotational, mixing, or stirring element may be paddles that are attached to the shafts, axels, arms or linking structures of a mixing device. The paddles may be specially modified such that substrates added to the mixing device are not crushed or damaged during the mixing period. In another embodiment, the paddles are also specifically coated with a material that decreases the tendency of the substrates and/or coating materials to agglomerate on the paddles. Such anti-agglomeration or anti-sticking materials are known in the art and include, but are not limited to silicon and teflon. In another embodiment, the paddles are polished.

In yet another embodiment, the rotational elements may be oriented in the same direction or opposite directions. Other orientations and configurations of the rotational, mixing, or stirring elements may be readily apparent to those of skill in the art at the time of the invention. Those of skill in the art will appreciate that modifications to the rotational, mixing, or stirring elements may be tailored to suit the particular aspects of the substrates and coating materials.

U.S. Provisional Application No. 61/441,180, titled "Methods and Systems for Coating Granular Substrates" filed February 9, 2011, describes various mixing devices, rotational, mixing, and stirring elements suitable for use in the methods and systems described herein.

### (c) Solids and Substrates

The disclosure provides for various devices capable of mixing solids, such as substrates, with liquids, such as coating materials, and methods of coating substrates.

Typically, the substrates are water soluble substrates or partly water soluble. The water soluble substrates is in granular form, as opposed to non-granular form. The term "granular" or "granule(s)" refers to the compaction and/or agglomeration, by either physical or chemical means, of smaller particles into a single particle. Additionally, granules may also refer to a material made by a compaction process or granulation of non-granular or powdered substrates. The non-granular or powdered substrates may be homogenous or heterogeneous mixtures. As such, the substrate may be a homogenous granule consisting of a single blend, or alternatively, a heterogeneous granule or composite comprising of a mixture of substrates. The granular substrate may be in the form of a pellet, cake, prill, tablet, spherical granule, or polyangular granule. The resultant granular substrate may range in sizes from about 20 size guide number ("SGN") to about 1000 SGN, more preferably about 50 SGN to about 500 SGN, and even more preferably about 100 or 150 SGN to about 300 or 400 SGN, even more preferably about 100 SGN to 400 SGN.

According to the invention, the granular substrate is a fertilizer. The fertilizer may be a single fertilizer or a composite of various fertilizers. Fertilizers that may be used in the invention include, but not limited to ammonium nitrate, ammonium sulfate, ammoniated superphosphate, ammonium chloride, mono-ammonium phosphate, diammonium phosphate, urea phosphate, calcium cyanamide, calcium nitrate, urea guanidine, guanidine nitrate and nitro guanidine, superphosphate and triple super-phosphate, potassium nitrate, potash, potassium chloride, potassium sulfate, potassium metaphosphate, urea, urea phosphate, and mixtures or combinations thereof. The fertilizer substrate may also contain secondary micronutrients (e.g., sulfate, calcium, magnesium). Those of skill in the art will appreciate that other fertilizers may be used in the methods and systems described herein.

In another particular aspect, the fertilizer comprises nitrogen ("N"), phosphorus ("P"), potassium ("K"), NPK, NP, NK, and PK. These elements maybe combined in different ratios. For example, in one aspect, the NPK ratios may be 13-13-13, 27-0-0, 12-50-0, 0-0-50, 21-7-14, 15-15-15, or 10-11-18. Other ratios of NPK will be evident to those of skill in the art.

In another particular aspect, the fertilizer is urea. The urea may comprise various sizes. For example, the size of the urea is a size guide number ("SGN") in the range of about 100 or 150 SGN to about 300 or 400 SGN, preferably about 100 SGN to 400 SGN.

Those of skill in the art will appreciate that various substrates may be applied to the devices and methods described herein. According to the invention the method is used to prepare controlled release fertilizers. Variations in the combinations of the substrate and coating material will be apparent to those of skill in the art and may be optimized to achieve the desired final product.

### (d) Liquids and Coating Materials

The devices and methods of the invention involve, for example, coating substrates with various coating materials. Coating materials suitable for use in these devices and methods include, but are not limited to, reactive monomers/oligomers, water based latex coatings, molten resins, solvent based polymer coatings, water based polymers, wax coatings, edible coatings such as candy coatings, and pharmaceutical coatings.

The coating material may be a water based latex coating. For example, the latex coating can be a polymeric insoluble latex material comprising copolymer blends of polyvinylidene chloride or ethylenically unsaturated co-monomers such as alkyl methacrylates, acrylonitriles, and alkyl acrylates, and mixtures thereof. The latex layer is capable of controlling the rate of nutrient release based on the coating weight and thickness of the polymeric coating.

The coating material may also be molten methylene urea resin, molten sulfur, molten waxes, polyurethane resins, alkyd resins, as well as other polymer systems.

The coating material may be a solvent based polymer. Solvent based polymers that may be used in the methods and systems of the invention are known in the art. *See, e.g*., U.S. Patent Nos., 3,223,518 and 4,019,890.

The coating material may be a water based polymer. Water based polymers that may be used in the methods and systems of the invention are known in the art. For example, U.S. Patent Nos. 4,549,897 and 5,186,732 provide examples of water based polymers coated in the absence of solvents.

In a particular aspect, the coating material is a synthetic water-permeable or vapor permeable polyurethane based resin or reaction products made therein. In a particular aspect, the resin is a reaction product of a two component system comprising a polyol component and a isocyanate containing component. In one embodiment, the polyol is a cardol, cardanol, or derivatives or oligomers of these compounds. In another embodiment, the isocyanate component is a polyisocyanate. The cardol, cardanol, or derivatives or oligomers thereof may be obtained from a natural product such as a renewable raw material. For example, the raw material may be cashew nut oils. U.S. Patent Nos.: 4,772,490 and 7,722,696, describes various resins comprising the reaction product of poylols, such as cardol, cardanol, or derivatives or oligomers thereof and polyisocyanate, such as isocyanates.

The coating materials embodied by present invention include thermoset resins. The choice of which type will be readily apparent to those of skill in the art based on the specific application of coating desired. In one embodiment of the invention, the thermoset resins may be chosen from, but not limited to epoxy polyester, vinylester, polyurethane, phenolicepoxies, or mixtures thereof.

### (e) Durations and Ratios of Mixing or Blending

The inventors have unexpectedly discovered that the continuous operation of mixing devices may be extended by performing the methods described herein. Specifically, operating mixing devices comprising stirring elements in cycles of alternating directions reduces the build-up or agglomeration of solids, liquids, or combinations thereof, e.g., curing or cured polymers, on these elements. It has been unexpectedly found that performing cycles of forward and reverse, or clockwise and counter clockwise of the rotational elements, significantly and substantially prevents build-up or fouling on the rotational and static elements of the mixing device. Moreover, the operation of the mixing device in the forward direction for a duration longer than the inverse direction substantially reduces the build-up on the rotational, stirring elements. Surprisingly, the build up on the static parts of the mixing device was also significantly reduced. Additionally, by using the same methods described herein, the inventors also discovered that the mixing devices may be self-cleaned.

In one embodiment, the use of the mixing devices may be extended by altering the direction of the rotational elements. In particular, when the mixing devices are blending or mixing solids, liquids, substrates, coating materials, or combinations thereof that have a tendency to form clumps, agglomerate, or build-up on the rotational elements, altering the direction of rotation alleviates the rotational elements from build up of such solids, liquids, or combinations thereof. In other embodiments, the duration of forward or reverse, clockwise or counter-clockwise, up or down direction are changed such that the rotational elements moving in one direction are intermittently changed to the opposite direction for a duration of time. The performance of these movements in cycles allows the continuous operation of the mixing devices without the need to clean up agglomerated, cured, or built up solids, liquids, or combinations thereof. The number of cycles performed will depend on the desired operation time of the mixing device. These methods may be applied to continuous or batch processes.

In one preferred embodiment, when the mixing device is operated in a continuous matter, the forward, clockwise or counter-clockwise, and up or down direction is longer than the inverse direction, i.e., the reverse, counter-clockwise or clockwise, and down or up direction, respectively. The durations may be in seconds, minutes, or hours. For example, the forward rotational direction may be at least 2, 3, 4, 5, 6, 7, 8 , 9, 10, 11, 12, 13, 14, 15, 16 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 times longer than the reverse direction. Alternatively, the ratio of forward rotational direction to reverse rotational direction may be 2:1, 3:1, 4:1, 5:1, 6:1, 7:1, 8:1, 9:1, 10:1, 11:1, 12:1, 13:1, 14:1, 15:1, 16:1, 17:1, 18:1, 19:1, 20:1, 21:1, 22:1, 23:1, 24:1, 25:1, 26:1, 27:1, 28:1, 29:1, 30:1, 31:1, 32:1, 33:1, 34:1, 35:1, 36:1, 37:1, 38:1, 39:1 40:1, 41:1, 42:1, 43:1, 44:1, 45:1, 46:1, 47:1, 48:1, 49:1, or 50:1. For example, in a preferred embodiment, the forward rotational direction is about 120 seconds and the reverse rotational direction is about 15 seconds (i.e., about an 8:1 ratio) or about 7 seconds (i.e., about a 17:1 ratio). The amount of time operated in the forward rotational direction to reverse rotational direction may vary depending on the substrates and coating materials used.

In a particular embodiment, the mixing device is operated in a batch process and the ratio of forward rotational direction to reverse rotational direction may be more balanced (e.g., 1:1) than the ratios described herein for continuous processes. In other embodiments, the mixing device is operated in a batch process and the ratio of forward rotational direction to reverse rotational direction are those ratios described herein for continuous processes.

### (f) Methods of Mixing and Coating Substrates

Various methods of coating solids and substrates with coating materials are known in the art. For example, methods that coat and cure substrates with a coating material in a single drum are described in U.S. Patent Nos. 4,549,897; 5,186,732; 4,772,490; 7,722,696; 3,223,518 and 4,019,890. Alternatively, methods that coat and cure substrates with a coating material in at least two separate vessels (*i.e.* coat in a first vessel and curing in a second vessel), are described in U.S. Provisional Application No. 61/441,180, titled "Methods and Systems for Coating Granular Substrates" filed February 9, 2011.

### EXAMPLES

The following examples describe various mixing devices and methods contemplated by the invention.

### Example 1

In this example, the inventors performed a method of coating urea substrates using a liquid resin. The substrate used was a soluble urea of SGN 220. The liquid resin used was a polyurethane based resin made by reacting a liquid polyol (Askocoat EP 7717) and a liquid diisocyanate (Askocoat EP 05547 Comp B). *See*, *e.g*., U.S. Patent No. 7,722,696.

The soluble urea granules were placed into a hopper that feeds the granules into a fluidized bed. The fluidized bed was preheated by air flow to approximately 45°C. The preheated granules were then transferred into a pugmill for mixing with the resin. Each pugmill comprised two shafts with fifteen paddles each with a capacity of approximately 25 liters. The pugmill was equipped with a 3.7 kW and 60Hz motor. The pugmill was also jacketed for temperature control.

The two resin components (*i.e.*, polyol and diisocyante) were each separately pumped into a static mixer before injection into the pugmill via two stainless steel tubes. The flow of the two resin components into the static mixer was controlled by mass-flow controllers. Mixing the resin components immediately before injection avoided any unwanted curing in the steel tubes.

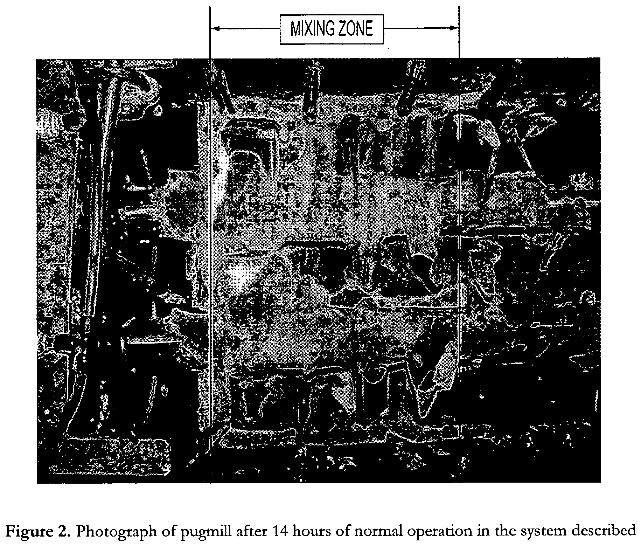

The soluble fertilizer and resin were added to a pugmill configured to mix and blend the components into a coated mixture. The pugmill used was specially configured to include a gear box allowing the reverse rotational movement of the rotational elements. After 14 hours of operation, it was observed that the paddles of the pugmill were heavily fouled with cured polymer as shown in Figure 2.

The inventors modified the method of mixing by performing cycles of forward and reverse paddle rotation. Specifically, the inventors modified the standard method by moving the paddles in the forward direction for 120 seconds followed by moving the paddles in the reverse direction for 15 seconds.

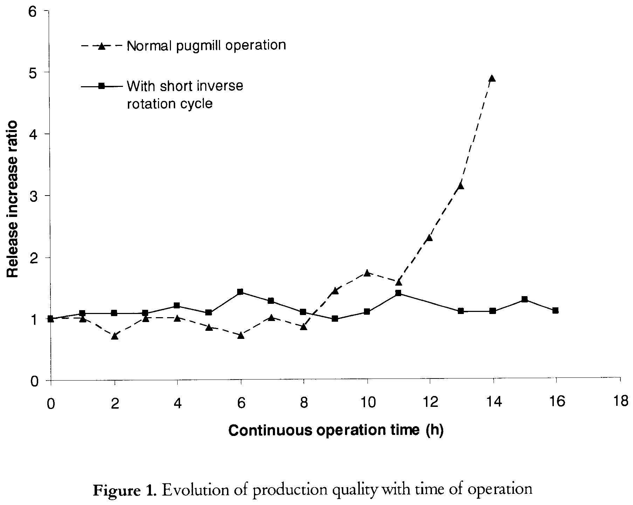

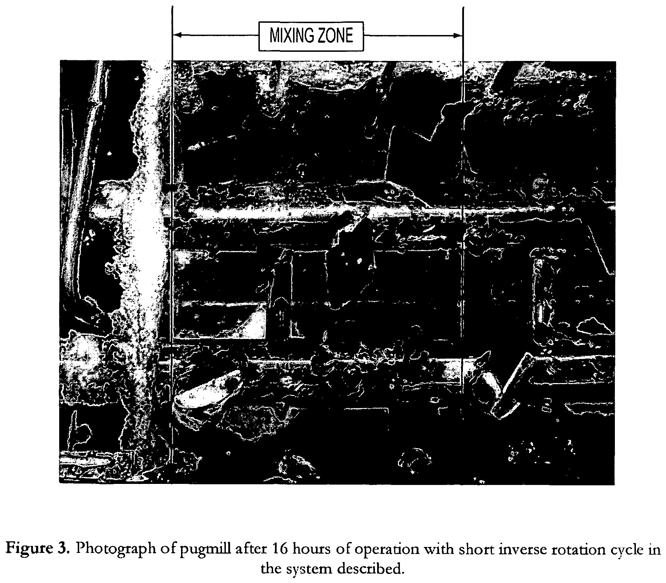

Unexpectedly, this modification extended the operation time of the pugmill in the manufacture of controlled release fertilizers as shown in Figure 1. Surprisingly, the paddles were substantially devoid of fouling when operated in the forward and reverse cycles (see Figure 3). Accordingly, by modifying the method of mixing by performing cycles of forward and reverse paddle rotation, continuous operation could be sustained for long runs without the need to discontinue operation due to fouling.

To test the quality of the product using this modified method, a leach test was performed. Product quality was measured at 1 hour intervals for nitrogen release. Twenty five grams of the product was placed into 250 mL of de-mineralized water, stirred, and, measured after 1 hour at 21°C. The water was stirred again and the concentration of nutrient released into the water was measured. An increase in the 1 hour release indicates a loss of performance. Figure 1 shows the ratio of release increase defined as *release at t* = *t* / *release at t* = *0* (t = 0 the time when steady state in the system is reached) versus the operation time (without stops). Table 1 summarizes the operation conditions.

**Table 1. Operation conditions**

| | |
|---|---|
| **Feed** | Urea SGN 220 |
| **Feed Rate** | 230 kg/h |
| **Resin** | Polyurethane |
| **Resin added in pugmill #1** | 50 % |
| **Resin added in pugmill #2** | 50 % |
| **Coating weight** | 4.3 % |
| **Pugmill speed** | 20 rpm |
| ***If Normal Operation*** | Forward rotation of pugmill |
| ***If Short Inverse*** | 120 seconds forward |
| ***Rotation Cycle*** | 15 seconds inverse rotation |

Using the modified method described herein, product quality remained unaltered during a 16 hour operational period. In contrast, normal operations (i.e. only forward rotation) resulted in rapid deterioration in the product quality after an eight hour operational period as shown in Figure 1.

## Claims

1. A method of preparing a controlled release fertilizer by coating a granular release fertilizer substrate with a coating material, the method comprising:
(a) adding a granular fertilizer substrate into a mixing device with stirring elements;
(b) adding a coating material into the mixing device;
(c) alternating the stirring elements in a forward and reverse rotational direction until the granular fertilizer substrate is coated with the coating material;
wherein, the stirring elements operated in a reverse rotational direction for a time shorter than the time the stirring elements are operated in the forward direction;
wherein the operation of the stirring elements in the reverse direction is for a time sufficient to substantially prevent agglomeration of coating materials and fertilizer having a tendency to agglomerate on the stirring elements;
wherein the coating material is a thermoset resin.

2. The method of claim 1, wherein said mixing device is a paddle mixer, a nauta mixer, or a pugmill.

3. The method of claim 2, wherein the mixing device is a pugmill.

4. The method of claim 1, wherein the stirring element is a paddle, stirrer, ribbon, spiral screw, or pins.

5. The method of claim 4, wherein the stirring element is a paddle.

6. The method of any one of claim 1 or 5, wherein at least two paddles are in opposing directions.

7. The method of claim 1, wherein the coating material comprises a polyol component and an isocyanate component.

8. The method of any one of claims 1-7, wherein duration of time in the forward rotational direction is at least 2 times greater than the duration of time in the reverse rotational direction orientation.

9. The method of any one of claims 1-7, wherein the duration of time in the forward rotational direction to reverse rotational direction is in a ratio of at least 8:1.

10. The method of claim 1, wherein the granular fertilizer substrate is water soluble or partly water soluble.

11. The method of claim 1, wherein the blending process is at least 8 hours.

12. The method of claim 1, wherein the blending process is at least 12 hours.

## Patentansprüche

1. Verfahren zum Vorbereiten eines Langzeitdüngers durch Beschichten eines granulatförmigen Langzeitdüngersubstrats mit einem Beschichtungsmaterial, wobei das Verfahren folgende Schritte umfasst:
a) Hinzufügen eines granulatförmigen Düngersubstrats in eine Mischvorrichtung mit Rührelementen;
b) Hinzufügen eines Beschichtungsmaterials in die Mischvorrichtung;
c) Abwechseln der Rührelemente in einer Vorwärts- und Rückwärtsdrehrichtung, bis das granulatförmige Düngersubstrat mit dem Beschichtungsmaterial beschichtet ist;
wobei die Rührelemente in einer Rückwärtsdrehrichtung eine Zeit lang betätigt werden, die kürzer ist als die Zeit, während der die Rührelemente in die Vorwärtsrichtung betätigt werden;
wobei die Betätigung der Rührelemente in der Rückwärtsrichtung für eine Zeit ist, die ausreicht, um im Wesentlichen das Agglomerieren von Beschichtungsmaterialien und Dünger, die dazu neigen, an den Rührelementen zu agglomerieren, zu verhindern;
wobei das Beschichtungsmaterial ein Duroplast ist.

2. Verfahren nach Anspruch 1, wobei die Mischvorrichtung ein Schaufelmischer, ein Nauta-Mischer oder ein Zwangsmischer ist.

3. Verfahren nach Anspruch 2, wobei die Mischvorrichtung ein Zwangsmischer ist.

4. Verfahren nach Anspruch 1, wobei das Rührelement einer Schaufel, einem Rührwerk, einem Band, einer Spiralschraube oder Stiften entspricht.

5. Verfahren nach Anspruch 4, wobei das Rührelement eine Schaufel ist.

6. Verfahren nach einem der Ansprüche 1 oder 5, wobei es mindestens zwei Schaufeln in entgegengesetzten Richtungen gibt.

7. Verfahren nach Anspruch 1, wobei das Beschichtungsmaterial eine Polyolkomponente und eine Isocyanatkomponente umfasst.

8. Verfahren nach einem der Ansprüche 1 bis 7, wobei die Zeitdauer in der Vorwärtsdrehrichtung mindestens zweimal länger als die Zeitdauer in der Orientierung der Rückwärtsdrehrichtung ist.

9. Verfahren nach einem der Ansprüche 1 bis 7, wobei die Zeitdauer in der Vorwärtsdrehrichtung zu der Rückwärtsdrehrichtung in einem Verhältnis von mindestens 8:1 steht.

10. Verfahren nach Anspruch 1, wobei das granulatförmige Düngersubstrat wasserlöslich oder teilweise wasserlöslich ist.

11. Verfahren nach Anspruch 1, wobei der Mischprozess mindestens 8 Stunden dauert.

12. Verfahren nach Anspruch 1, wobei der Mischprozess mindestens 12 Stunden dauert.

## Revendications

1. Procédé de préparation d'un engrais à libération contrôlée par enrobage d'un substrat d'engrais à libération granulaire avec un matériau d'enrobage, le procédé comprenant :
(a) ajouter un substrat d'engrais granulaire dans un dispositif de mélange avec des éléments d'agitation ;
(b) ajouter un matériau d'enrobage dans le dispositif de mélange ;
(c) alterner les éléments d'agitation dans des sens de rotation en avant et inverse jusqu'à ce que le substrat d'engrais granulaire soit enrobé du matériau d'enrobage ;
les éléments d'agitation étant actionnés dans un sens inverse de rotation pendant une durée plus courte que la durée pendant laquelle les éléments d'agitation sont actionnés dans le sens en avant ;
l'actionnement des éléments d'agitation dans le sens inverse ayant lieu pendant une durée suffisante pour sensiblement empêcher l'agglomération de matériaux d'enrobage et d'engrais ayant tendance à s'agglomérer sur les éléments d'agitation ;
le matériau d'enrobage étant une résine thermodurcie.

2. Procédé selon la revendication 1, dans lequel ledit dispositif de mélange est un mélangeur à palettes, un mélangeur Nauta ou un malaxeur à axe vertical.

3. Procédé selon la revendication 2, dans lequel le dispositif de mélange est un malaxeur à axe vertical.

4. Procédé selon la revendication 1, dans lequel l'élément d'agitation est une palette, un agitateur, un ruban, une vis sans fin ou des broches.

5. Procédé selon la revendication 4, dans lequel l'élément d'agitation est une palette.

6. Procédé selon l'une quelconque des revendications 1 ou 5, dans lequel au moins deux palettes sont dans des directions opposées.

7. Procédé selon la revendication 1, dans lequel le matériau d'enrobage comprend un composant polyol et un composant isocyanate.

8. Procédé selon l'une quelconque des revendications 1 à 7, dans lequel la durée dans le sens de rotation en avant est au moins 2 fois plus longue que la durée dans l'orientation de sens inverse de rotation.

9. Procédé selon l'une quelconque des revendications 1 à 7, dans lequel la durée dans le sens de rotation en avant à la durée dans le sens inverse de rotation est à un rapport d'au moins 8:1.

10. Procédé selon la revendication 1, dans lequel le substrat d'engrais granulaire est soluble dans l'eau ou partiellement soluble dans l'eau.

11. Procédé selon la revendication 1, dans lequel le traitement de mélange dure au moins 8 heures.

12. Procédé selon la revendication 1, dans lequel le traitement de mélange dure au moins 12 heures.
